# EUROPEAN PATENT APPLICATION

(11) **EP 4 813 217 A2**
(43) Date of publication of application: **30.09.2026**
(21) Application number: 26178201.5
(22) Date of filing: 13.07.2022
(51) Int. Cl.: A23L 27/28

(54) **FLAVOR COMPOSITION**

(30) Priority: 14.07.2021 EP 21185677; 14.07.2021 EP 21185681
(62) Document number(s) of the earlier application(s) in accordance with Art. 76 EPC: 22741533.8 / 4 369 939
(71) Applicant: Planet A Foods GmbH, 82152 Planegg (DE)
(72) Inventor: MARQUART, Sara F., 82152 Planegg (DE); MARQUART, Maximilian, 82152 Planegg (DE)
(74) Representative: Schiweck Weinzierl Koch Patentanwälte Partnerschaft mbB

(57) **Abstract**

The present invention relates to a flavor composition, a method for preparing a flavor composition, a food product containing the flavor composition, and the use of the flavor composition. The present invention further relates to a conched confectionery product and a method for preparing a conched confectionery product.

## Description

### Technical Field

The present invention relates to a flavor composition, a method for preparing a flavor composition, a food product containing the flavor composition, and the use of the flavor composition. The present invention further relates to a conched confectionery product and a method for preparing a conched confectionery product.

### Technological Background

Cocoa flavor is the basis for ample food products such as confectionery products and beverages. In 2019, 5.5 million tons of cocoa beans have been harvested worldwide. However, the area where cocoa can be harvested is limited. Furthermore, obtaining the final raw product which can be used for example in the manufacturing of chocolate requires multiple processing steps including harvesting, sorting, fermenting, and drying as well as the shipping costs. This makes cocoa a rather expensive raw material.

In addition, cocoa pricing can be highly volatile, and the industry can experience tight supplies as emerging markets are increasing their consumption of chocolate and cocoa-based products.

Furthermore, the cultivation and production of cocoa bring about numerous negative environmental impacts in order to meet the high worldwide demand, such as extensive greenhouse gas emissions, e.g. due to deforestation and land-use change, a high water footprint, the use of large amounts of herbicides and pesticides, as well as its shipment to destinations where it is further processed in food products such as chocolate.

Therefore, there remains a need to both reduce and/or replace the usage of conventional cocoa obtained from the cocoa tree with a cocoa substitute which is based on natural starting products and which has similar characteristics such as flavor profiles and odor, and can be applied in the same way as conventional cocoa.

There also remains a need to provide a confectionery product in which the usage of conventional cocoa obtained from the cocoa tree can be substantially reduced or even avoided, wherein the confectionery product nevertheless has similar characteristics such as flavor profiles and odor as typical confectionery products with chocolate flavor.

It would be even more advantageous if the natural starting products on which the cocoa substitute is based are byproducts of other production processes which usually are of little economic value anymore or find limited further application, such as kernels and pomace in the production of jams and juices.

It would also be even more advantageous if the natural starting products on which the confectionery product is based and which impart the flavor, for example, the chocolate flavor, are byproducts of other production processes which usually are of little economic value anymore or find limited further application, such as kernels and pomace in the production of jams and juices.

### Summary of the invention

The inventors surprisingly found that the inventive flavor composition meets the above-referenced needs. In particular, the inventors surprisingly found that the inventive flavor composition could be adjusted, mimicking flavor profiles of different cocoa types, e.g. so-called Forastero cocoa (Theobroma cacao IFC-1), and/or the flavor profiles of chocolates, including dairy-like and buttery aroma notes, usually not found in cocoa.

The inventors surprisingly found that a conched confectionery product of the present invention meets the above-referenced needs. In particular, the inventors surprisingly found that the conched confectionery product could be adjusted as required, mimicking flavor profiles of different cocoa types, e.g. so-called Forastero cocoa (Theobroma cacao IFC-1), and/or the flavor profiles of chocolates, including dairy-like and buttery aroma notes, usually not found in cocoa, which flavors are at least in part generated by, and in, a conching step.

Accordingly, one aspect of the invention provides a flavor composition comprising at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material has been heat-treated in the presence of at least one amino acid and/or amino acid derivative, at least one saccharide, or a combination thereof.

Another aspect of the invention provides a method for preparing a flavor composition according to the present invention, the method comprising
(a) providing a mixture of
   (i) at least one plant material, and
   (ii) at least one amino acid and/or amino acid derivative, at least one saccharide, or a combination thereof,

   in an aqueous medium,
   wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition.

Another aspect of the invention provides a flavor composition obtained by the method according to the present invention.

Another aspect of the invention provides a food product containing the flavor composition according to the present invention.

Another aspect of the invention provides the use of the flavor composition according to the present invention as a cocoa substitute.

Another aspect of the invention provides a conched confectionery product comprising an emulsion of a flavoring composition according to the present invention and an edible fat, wherein the conched confectionery product is substantially free of cocoa or cocoa-derived solids.

Another aspect of the invention provides a method for preparing a conched confectionery product according to the present invention, the method comprising:
(a) providing at least one substrate carrier, wherein the substrate carrier material comprises at least one natural and/or a processed or restructured plant material, wherein the at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
(b) providing at least one amino acid and/or amino acid derivative, at least one saccharide, or a combination thereof;
(c) contacting the at least one substrate carrier material and the at least one amino acid and/or amino acid derivative, at least one saccharide, or a combination thereof, wherein contacting is carried out prior to or in a conching step;
(d) reacting the at least one substrate carrier material with the at least one amino acid and/or amino acid derivative, at least one saccharide, or a combination thereof in a conching step to provide the conched confectionery product.

Another aspect of the invention provides a conched confectionery product prepared by the method according to the present invention.

### Brief description of the Figures

Figure 1: Sensory of apricot kernel and oat-based flavor composition; treated and control.
Figure 2: GC-MS data of apricot kernel and oat-based flavor composition; treated and control.
Figure 3: Sensory of color and aroma of milk chocolate substitute with oat-based flavor composition; treated and control.
Figure 4: GC-MS data of a dairy-free milk-type chocolate substitute with oat-based flavor composition; treated and control.
Figure 5: Sensory of aroma, color and taste of dark chocolate substitute compared to genuine dark chocolate (60% cocoa).

### Detailed description

In the following, the invention will be explained in more detail.

### Definitions

For the present invention to be readily understood, several definitions of terms used in the course of the invention are set forth below.

As used herein, the term "flavor" refers to one or more sensory stimuli, such as, for example, one or more taste (gustatory), smell (olfactory), touch (tactile), and temperature (thermal) stimuli. The terms "flavor" and "aroma" are synonymous and are used interchangeably. The sensory experience of a subject exposed to a flavor may be classified as a characteristic experience for the particular flavor. For example, a flavor can be identified by the subject as being a floral, citrus, berry, nutty, caramel, chocolate, peppery, smoky, cheesy, meaty, etc. flavor. As used herein, a flavor composition can be selected from a liquid, dry powder, spray, paste, suspension, and any combination thereof. The flavor can be a natural composition, an artificial composition, a nature-identical, or any combination thereof.

As used herein, the term "flavor profile" refers to a combination of sensory stimuli, for example, tastes, such as sweet, sour, bitter, salty, kokumi, and/or umami tastes, and/or olfactory, tactile, and/or thermal stimuli. The flavor profile may comprise one or more flavors that contribute to the sensory experience of a subject. Modifying, changing, or varying the combination of stimuli in a flavor profile may change the sensory experience of a subject.

As used herein, the term "food product" refers to an ingestible product, such as human food, animal (pet) foods, and pharmaceutical compositions.

As used herein, the term "flavor composition" refers to at least one, two, three, four, five, or more compounds or biologically acceptable salts thereof that modulate, including enhancing, multiplying, potentiating, decreasing, suppressing, or inducing, the tastes, smells and/or flavors of a natural or synthetic tastant, flavoring agent, taste profile, flavor profile and/or texture profile in an animal or a human. The flavor composition may comprise a combination of compounds or biologically acceptable salts thereof. The flavor composition may further include one or more excipients.

As used herein, the term "plant material" as used herein is meant to comprise the mentioned material as such but also comprises processed products or side-products thereof such as press cakes, pomace, polished grains, and spent grounds, as well as parts of the respective plant material such as shells, grape skins, marc, pods, and pulp. Yeasts and fungi shall be considered as belonging to "plant material" for the purpose of the present invention.

As used herein, the term "cocoa" also comprises cacao. The term "cocoa" refers to processed products derived from the Theobroma cacao fruit, in particular the seeds thereof (cacao beans), such as fermented, roasted, alkalized, ground, and pressed cacao beans. The term "cacao" refers to the unprocessed products derived from the Theobroma cacao fruit, in particular the seeds (cacao beans) thereof.

As used herein, the term "cocoa side products" refers to anything derived from the cocoa tree, including fruits, that are not the cocoa bean, e.g. cocoa pulp, cocoa shells, cocoa tree leaves, and the like.

As used herein, the term "press cake" refers to the residue of the oil production, of oleaginous plant materials (e.g. seeds, or fruits), such as olives, apricot kernels, canola, linseed, sunflower, etc. The residue is derived from pressing or milling the plant materials, to recover the oil for further applications (food, cosmetics, and the like). The residue is rich in protein and/or carbohydrates.

As used herein, the term "chocolate", "chocolates" or "chocolate product" refers to all chocolate or chocolate-like compositions with a fat fraction that can be tempered and that can comprise at least one cocoa or cocoa-like component in this fat fraction. The "fat fraction" of the chocolate according to the present invention can comprise cocoa butter, milk fat, butter oil, and other fats that can be tempered such as cocoa butter, or mixtures of cocoa butter with these fats. In the present invention, a "fat fraction that can be tempered" means fats that can take different crystalline structures or polymorphs. These fats are typically processed in a tempering process.

As used herein, the term "chocolate substitute" refers to all chocolate-like compositions with a fat fraction that can comprise substantially no cocoa component in this fat fraction. The "fat fraction" of the chocolate substitute according to the present invention can comprise milk fat, butter oil, cocoa butter substitutes, cocoa butter equivalents, algae lipids, biosynthesized lipids, e.g., such as cocoa butter equivalents derived in a fermentation process from yeasts, e.g. genetically modified yeasts, or other fungi, e.g. Rhodosporidium toruloides.

The term "particle size" or "volume-based particle size" or "volume-based particle size distribution" as used herein is equivalent to and also referred to as the Dv50 or D50 and means that at least about 50% of the particles have a diameter of less than the size specified. The aforementioned terms are used interchangeably herein. For example, a volume-based particle size (Dv50) of less than about 1000 nm, means that 50% of the particle population has a diameter of less than about 1000 nm when measured by static or dynamic light scattering techniques known to those skilled in the art. Unless otherwise specified, all particle sizes are specified in terms of volume-based measurements and are measured by laser light scattering/diffraction. The terms "D90" and "D10" mean that respectively at least about 90% and 10% of the particles have a diameter of less than the size specified. These may also be referred to as "Dv90" and "Dv10" respectively, and these terms are used interchangeably herein.

As used herein, the term "chocolate confectionery product" refers to preparations made with chocolate and/or chocolate-substitutes, e.g. bars, snack bars, chips, flakes, fillings, inclusions, coatings, and the like.

As used herein, the term "substantially free of" refers to a mass that is at least 95% free of the named ingredient, e.g. 95% free of cocoa, such as at least 96%, at least 97%, at least 98%, or at least 99% of the respective ingredient.

As used herein, the term "cocoa butter replacers" refers to a fat that is derived from hydrogenated and fractionated vegetable fats. It can be used to impart gloss retention and sharp meltdown to the chocolate confectionery products without tempering. Cocoa butter replacer can be mixed with other fats and cocoa, and/or cocoa powder substitutes to produce chocolate confectionery products.

As used herein, the term "cocoa butter substitutes" refers to a confectionery fat substitute. This product is formulated from hydrogenated and fractionated palm kernel oil. It can be used to give a final chocolate confectionery product a good snappiness, good melting characteristics, and good flavor release without tempering.

As used herein, the term "cocoa butter equivalent" refers to a fat that is specially formulated from palm oil, shea butter, mango kernel fat, sal fat, or illipe butter in order to resemble cocoa butter in both physical and chemical properties. Using this product shows compatibility with cocoa butter and shares similar crystallization and melt profiles. It can be used to provide cost reduction as a cocoa butter substitute at any ratio, imparting strong heat resistance and melting characteristics.

As used herein, the term "steeping" refers to a process of marinating plant material in a liquid (water, lipids, organic solvent), with or without stirring, and with or without heating for 5 minutes and up to 14 days.

As used herein, the term "cooking" refers to a process of heating a mixture to at least 80°C.

As used herein, the term "roasting" refers to a process of heating by means of confection and/or conduction, at elevated temperatures such as from 140°C to 300 °C
As used herein, the term "toasting" refers to a process of heating by means of confection and/or conduction, at elevated temperatures such as from 100°C to 140°C
As used herein, the term "drying" refers to a process of the removal of water from a mixture, that can be carried out via methods such as microwave-assisted drying, freeze-drying, spray drying, freeze concentration, drying under reduced pressure, thin layer drying, convectional heating, conductional heating and the like to remove water.

As used herein, the term "aqueous medium" refers to a liquid, which is composed of more than 50% of water.

As used herein, the term "conching" refers to a process of mechanical mixing, whereby a surface scraping mixer and agitator, known as a "conche" or "melangeur", evenly distributes lipids within chocolate and chocolate substitutes, and may further reduce the particle size of the cocoa- and non-cocoa solids. Conching is typically carried at elevated temperatures such as from 45°C to 80°C, for elongated times, such as 1 hour to 72 hours.

As used herein, the term "comprising" is to be construed as encompassing both "including" and "consisting of", both meanings being specifically intended, and hence individually disclosed, embodiments according to the present invention.

As used herein, the articles "a" and "an" preceding an element or component are intended to be nonrestrictive regarding the number of instances (i.e. occurrences) of the element or component. Therefore, "a" or "an" is to be read to include one or at least one, and the singular word form of the element or component also includes the plural unless the number is obviously meant to be singular.

As used herein, the term "about" modifying the quantity of a substance, ingredient, component, or parameter employed refers to variation in the numerical quantity that can occur, for example, through typical measuring and handling procedures, e.g., liquid handling procedures used for making concentrates or solutions. Furthermore, variation can occur from inadvertent error in measuring procedures, differences in the manufacture, source, or purity of the ingredients employed to carry out the methods, and the like. In one embodiment, the term "about" means within 10% of the reported numerical value. In a more specific embodiment, the term "about" means within 5% of the reported numerical value.

As outlined above, one aspect of the invention provides a flavor composition comprising at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material has been heat-treated in the presence of at least one amino acid and/or amino acid derivative, at least one saccharide, or a combination thereof.

### Plant material

In one embodiment, the at least one plant material comprises seeds derived from fruits of the *Amygdaloideae* subfamily, and preferably apricot kernels, plum kernels, peach kernels, cherry kernels, and combinations thereof.

In one embodiment, the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof.

In one embodiment, the at least one plant material is selected from the group consisting of apricot kernels, plum kernels, peach kernels, cherry kernels, jackfruit seeds, grape seeds, carob, and barley malt, oats, beans, and combinations thereof. Preferred plant materials and combinations thereof include
(i) apricot kernels and oats
(ii) apricot kernels, oats, grape seeds, and sprouted barley
(iii) buckwheat
(iv) fava bean
(v) apricot kernels, oats, grape seeds, and sprouted barley
(vi) carob, sprouted barley, and oats
(vii) apricot kernels, grape seeds and oats

Exemplary grain, cereals, and pseudo cereals include corn, maize, oat, barley, rye, wheat, millet, sorghum, rice, quinoa, amaranth, buckwheat, and the like.

Exemplary beans include fava beans.

### Amino acid and amino acid derivative

In one embodiment, the amino acid is selected from the group consisting of alanine, phenylalanine, glycine, isoleucine, lysine, leucine, proline, serine, threonine, valine, tyrosine, ornithine, and combinations thereof.

Preferably the amino acid is selected from the group consisting of phenylalanine, glycine, isoleucine, lysine, leucine, proline, serine, threonine, valine, and combinations thereof.

Furthermore, amino acid derivatives may be used according to the present invention. Amino acid derivatives include amino acids modified by acetylation.

In one embodiment, the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.

In one embodiment, the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.

### Saccharides

In one embodiment, the at least one saccharide is selected from monosaccharides, disaccharides, and combinations thereof.

In one embodiment, the monosaccharide is selected from the group consisting of glucose, fructose, xylose, rhamnose, and combinations thereof.

In one embodiment, the disaccharide is selected from the group consisting of sucrose, maltose, lactose, and combinations thereof. Preferably, the disaccharide is selected from the group consisting of lactose, sucrose, and combinations thereof.

In one embodiment, the flavor composition comprises heat-treated apricot kernels, wherein the apricot kernels have been heat-treated in the presence of glucose, glycine, leucine, and phenylalanine.

In one embodiment, the flavor composition comprises heat-treated oat, wherein the oat has been heat-treated in the presence of glucose, glycine, isoleucine, leucine, and phenylalanine.

In one embodiment, the flavor composition comprises heat-treated grape seeds, wherein the grape seeds have been heat-treated in the presence of glucose, glycine, leucine, phenylalanine, and proline.

In one embodiment, the flavor composition comprises heat-treated apricot kernels and heat-treated oats, wherein the apricot kernels and oats have been heat-treated in the presence of glucose, glycine, isoleucine, leucine, and phenylalanine.

In one embodiment, the flavor composition comprises grape seeds, heat-treated apricot kernels, heat-treated barley malt, and heat-treated oats, wherein the apricot kernels and oats have been heat-treated in the presence of glucose, glycine, leucine, and phenylalanine;

In one embodiment, the flavor composition comprises heat-treated buckwheat, wherein the buckwheat has been heat-treated in the presence of glucose, glycine, leucine, and phenylalanine;

In one embodiment, the flavor composition comprises heat-treated fava beans, wherein the fava beans have been heat-treated in the presence of glucose, glycine, leucine, isoleucine, and phenylalanine;

In one embodiment, the flavor composition comprises heat-treated grape seeds, apricot kernels, barley malt, and oats, that have been heat-treated in the presence of glucose, glycine, leucine, isoleucine and phenylalanine;

In one embodiment, the flavor composition comprises heat-treated carob, heat-treated barley malt, and heat-treated oats, wherein carob, barley malt, and oats have been heat-treated in the presence of glucose, glycine, leucine, isoleucine, lysine, and phenylalanine;

In one embodiment, the flavor composition comprises heat-treated oats, heat-treated grape seeds, and heat-treated apricot kernels, wherein the oats, grape seeds, and apricot kernels have been heat-treated in the presence of glucose, glycine, leucine, isoleucine, proline and phenylalanine.

In one embodiment, the flavor composition is a cocoa flavor composition.

In one embodiment, the flavor composition is a chocolate flavor composition.

In one embodiment, the flavor composition is substantially free of cocoa or cocoa-derived solids.

### Heat-treatment of the plant material

According to the present invention, the at least one plant material comprised in the flavor composition is a heat-treated plant material.

In one embodiment, the at least one plant material has been heat-treated by steeping, cooking, thermally drying, microwave irradiation, roasting, toasting, or a combination thereof.

In one embodiment, the at least one plant material has been heat-treated at a temperature from 100°C to 200°C for 2 min to 60 min. Preferably, the at least one plant material has been heat-treated at a temperature from 110°C to 180°C for 2 min to 45 min. More preferably, the at least one plant material has been heat-treated at a temperature from 120°C to 160°C for 5 min to 45 min.

The flavor composition according to the invention may be provided in granulated or pulverized form. In one embodiment, the particle size D50 of the flavor composition is 10 mm or less, such as 5 mm or less, 3 mm or less, 1 mm or less, 700 µm or less, 500 µm or less, 400 µm or less, 300 µm or less, 200 µm or less, 100 µm or less, 90 µm or less, 80 µm or less, 70 µm or less, 60 µm or less, 50 µm or less, 40 µm or less, 30 µm or less, 20 µm or less, 10 µm or less. In one embodiment, the particle size D50 of the flavor composition is in a range of from 10 µm to 800 µm, such as in a range of from 50 µm to 500 µm.

### Method for preparing a flavor composition

As outlined above, another aspect of the invention provides a method for preparing a flavor composition according to the present invention, the method comprising
(a) providing a mixture of
   (i) at least one plant material, and
   (ii) at least one amino acid and/or amino acid derivative, at least one saccharide, or a combination thereof,

   in an aqueous medium,
   wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition.

In one embodiment, the plant material may be pre-treated before providing the mixture of step (a) of the method according to the present invention. Such a pre-treatment may comprise the removal of cyanide in the plant material such as apricot, peach, plum or cherry kernels.

In one embodiment, the heating in step (b) comprising heating the aqueous mixture to a temperature of from 60°C to 100°C, preferably a temperature of from 80°C to 95°C, for at least 5 min, preferably for at least 10 min such as from 10 min to 180 min.

In one embodiment, the heat treatment in step (e) comprises roasting the dried mixture at a temperature of from 120°C to 220°C, preferably at a temperature of from 130°C to 210°C, for at least 2 min, preferably for at least 4 min such as from 4 min to 60 min.

In one embodiment, the method further comprises adjusting the pH of the mixture of step (a) to a range of from 6.5 to 9.5. Preferably, the pH is adjusted to a range of from 8.0 to 9.0.

Suitable compounds for adjusting the pH include acids and their corresponding salts (e.g. phosphoric acid, lactic acid, acetic acid). Adjusting the pH may include heating the aqueous mixture to a temperature of from 60°C to 100°C, preferably to a temperature of from 80°C to 95°C.

In one embodiment, the amount of the at least one amino acid and/or derivatives thereof in the mixture provided in step (a) is of from 0 wt.-% to 5 wt.-%, preferably of from 0.2 wt.-% to 2.5 wt.-%, based on the total weight of the at least one plant material.

In one embodiment, the amount of the at least one saccharide in the mixture provided in step (a) is of from 0 wt.-% to 10 wt.-%, preferably of from 1 wt.-% to 7.5 wt.-%, more preferably of from 1 wt.-% to 5 wt.-%, based on the total weight of the at least one plant material.

Another aspect of the invention provides a flavor composition obtained by the method according to the present invention.

The flavor composition according to the present invention may be used in food products. Therefore, another aspect of the invention provides a food product containing the flavor composition according to the present invention.

In one embodiment, the food product is selected from the group consisting of confectionery products, sweet baked products, ice creams, dairy- and non-dairy products, beverages, and snack products.

Due to the resemblance in the flavor profile with that of cocoa, the flavor composition according to the present invention can be used as a cocoa substitute.

Another aspect of the invention provides a conched confectionery product comprising an emulsion of a flavor composition according to the present invention and an edible fat, wherein the conched confectionery product is substantially free of cocoa or cocoa-derived solids.

In one embodiment, the conched confectionery product comprises from 0.5 wt.-% to 20 wt.-% flavor composition based on the total weight of the conched confectionery product. Preferably, the conched confectionery product comprises of from 2 wt.-% to 20 wt.-% flavor composition based on the total weight of the conched confectionery product, such as from 4 wt.-% to 19 wt.-%.

Another aspect of the invention provides a method for preparing a conched confectionery product, the method comprising:
(a) providing at least one substrate carrier, wherein the substrate carrier material comprises at least one natural and/or a processed or restructured plant material, wherein the at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
(b) providing at least one amino acid and/or amino acid derivative, at least one saccharide, or a combination thereof;
(c) contacting the at least one substrate carrier material and the at least one amino acid and/or amino acid derivative, at least one saccharide, or a combination thereof, wherein contacting is carried out prior to or in a conching step;
(d) reacting the at least one substrate carrier material with the at least one amino acid and/or amino acid derivative, at least one saccharide, or a combination thereof in a conching step to provide the conched confectionery product.

### Plant material

All exemplary plant materials, embodiments, and preferred embodiments relating thereto and included herein, specifically as described in the context of the flavor composition, apply to all aspects of the inventive conched confectionery product and method for preparing a conched confectionery product.

### Amino acid and amino acid derivative

All exemplary amino acids and amino acid derivatives, embodiments, and preferred embodiments relating thereto and included herein, specifically as described in the context of the flavor composition, likewise apply to all aspects of the inventive conched confectionery product and method for preparing a conched confectionery product.

### Saccharide

All exemplary saccharides, embodiments, and preferred embodiments relating thereto and included herein, specifically as described in the context of the flavor composition, likewise apply to all aspects of the inventive conched confectionery product and method for preparing a conched confectionery product.

The flavor composition may be heat-treated in the presence of at least one amino acid and/or amino acid derivative, at least one saccharide, or a combination thereof in a conching step.

In one embodiment, the conched confectionery product is a chocolate confectionery product.

In one embodiment, the conched confectionery product comprises of from 0.5 wt.-% to 20 wt.-% flavor composition of the invention based on the total weight of the conched confectionery product, such as 0.5, 1, 2, 3, 4, 5, 6, 7, 8, 9, 10, 11, 12, 13, 14, 15, 16, 17, 18, 19, or 20 wt.-%. In one embodiment, the conched confectionery product comprises of from 2 wt.-% to 20 wt.-% flavor composition of the invention based on the total weight of the conched confectionery product.

Preferably, the conched confectionery product comprises of from 4 wt.-% to 19 wt.-% flavor composition of the invention based on the total weight of the conched confectionery product.

In one embodiment, the conched confectionery product comprises (in wt.-% based on the total weight of the conched confectionery product):
(i) 0.5-20 wt.-% flavor composition according to the present invention,
(ii) 0-55 wt.-% sugar (e.g. sucrose, lactose),
(iii) 10-50 wt.-% cocoa butter equivalent (commercially available, based on palm fat, and/or shea butter)
(iv) 10-30 wt.-% milk powder (whole milk and/or skimmed milk powder), oat milk powder, oat flour, fava bean powder, fava bean protein, pea milk powder, pea protein
(v) 0-10 wt.-% butter fat
(vi) 0-1 wt.-% vanillin, and
(vii) 0-1 wt.-% lecithin (e.g. soy lecithin, sunflower lecithin).

In one embodiment, the conching step is carried out at a temperature of from 40°C to 90°C, preferably from 50°C to 70°C, and a time of at least 8 minutes, preferably a time of from 10 minutes to 96 hours, more preferably a time of from 30 minutes to 48 hours, and even more preferably a time of from 2 hours to 24 hours.

In one embodiment, the at least one substrate carrier material has a particle size (D50) of 40 µm or less, preferably 30 µm or less, and more preferably 20 µm or less.

In one embodiment, the at least one amino acid and/or amino acid derivative, at least one saccharide, or a combination thereof is added to a lipid matrix prior to the contacting with the at least one substrate carrier material, and reacted in a conching step, and the at least one substrate carrier material is added subsequently to the lipid matrix.

In one embodiment, the amount of the at least one amino acid and/or amino acid derivative in step (c) is from 0 wt.-% to 5 wt.-%, preferably from 0.2 wt.-% to 2.5 wt.-%, based on the total weight of the at least one substrate carrier material.

In one embodiment, the amount of the at least one saccharide in step (c) is from 0 wt.-% to 10 wt.- %, preferably from 1 wt.-% to 7.5 wt.-%, more preferably from 1 wt.-% to 5 wt.-%, based on the total weight of the at least one substrate carrier material.

In one embodiment, contacting the substrate carrier material with the at least one amino acid and/or amino acid derivative, at least one saccharide, or a combination thereof comprises contacting with the at least one amino acid and/or amino acid derivative, at least one saccharide, or a combination thereof emulsified in a lipid matrix.

In one embodiment, the reaction is carried out in a conching step in an emulsion and/or lipid matrix.

In one embodiment, the conching step comprises water removal of the reaction mixture comprising the substrate carrier material and the at least one amino acid and/or amino acid derivative, at least one saccharide, or a combination thereof at a temperature of from 20°C to 140°C, preferably of from 30°C to 120°C, more preferably of from 40°C to 90°C, and even more preferably of from 50°C to 80°C.

Due to the resemblance in the flavor profile with that of cocoa, the conched confectionery product according to the present invention can be used as a substitute for chocolate or chocolate flavor confectionery products.

Accordingly, in one embodiment, the conched confectionery product is a chocolate confectionery product. In one embodiment, the conched confectionery product has similar organoleptic properties as chocolate.

In one embodiment, the conched confectionery product is substantially free of cocoa or cocoa-derived solids.

Another aspect of the invention provides a conched confectionery product obtained by the method according to the present invention.

It is to be understood that all embodiments including preferred embodiments recited for a particular aspect of the present invention (e.g. the flavor composition) likewise apply to all other aspects of the present invention, such as methods and uses according to the present invention.

### Examples

The following examples illustrate the present invention. They are intended to aid in the understanding of the invention, and they should not be construed to in any way limit the scope of the invention.

### Example 1: Flavor composition based on apricot kernels, oats

### Pre-treatment:

Apricot kernels were pre-treated to remove residual cyanide. 500 g of apricot kernels were placed in a container, and 5 L of water was added. The apricot kernels were soaked for 24 hours, the water was drained and another 5 L was added (replenished), with the kernels being soaked for an additional 24 hours. The water was drained again, and the kernels were dried at 90°C for 12 hours.

### Preparation of flavor composition:

100 g of the pre-treated apricot kernels were placed in a beaker, and 100 mL water, 5 g glucose, 0.75 g leucine, 0.75 g isoleucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. The apricot kernels were roasted in a drum roaster for 6.5 min at 170°C. The flavor was intensely cocoa- and chocolate-like, with subtle notes of sweet and roasted aroma.

100 g of untreated, hulless oat (*Avena nuda*) grains were placed in a beaker, and 100 mL water, 5 g glucose, 0.75 g leucine, 0.75 g isoleucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. After the same drying, the mixture was roasted in a drum roaster for 6.5 min at 170°C. The grains' flavor was intensely cocoa- and chocolate-like, with subtle notes of cereal and roasted aroma. After roasting and grinding, the roasted apricot kernels and hulless oats were mixed 70/30 (w/w) and ground using a ball mill to a particle size D50 of about 600 µm. The obtained flavor composition can then be applied as a cocoa powder substitute.

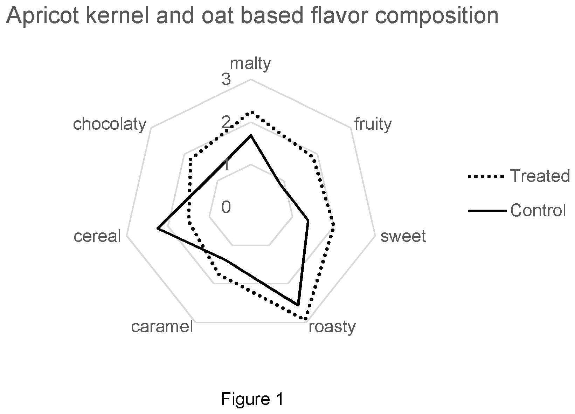

Figure 1 depicts the results of the sensory evaluation (n=8) of the aroma of the flavor composition compared to a flavor composition that was prepared equally, but incubated with water only (control). The panelists were asked to rate the given aroma descriptors from 0 (no aroma) to 5 (strong aroma). Besides the cereal-like aroma, which was decreased, all other descriptors were perceived as stronger for the incubated sample. In Particular, the chocolaty flavor was increased from 1.2 to 1.8.

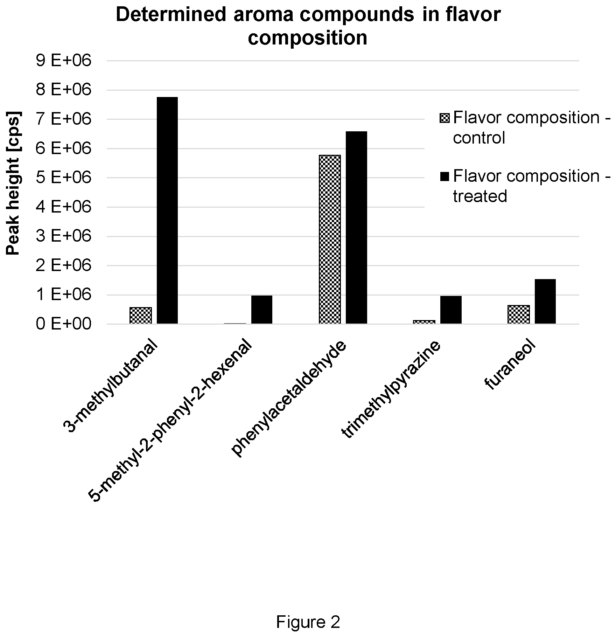

The results of the sensory experiments are backed up by gas chromatography-mass spectrometry (GC-MS) data as shown in Figure 2. Figure 2 shows that certain aroma compounds were increased compared to the control. 5-methyl-2-phenyl-2-hexenal, also called cocoa hexenal, which has a cocoa-like smelling aroma was detected only in the treated flavor composition. 3-methylbutanal, which has a malty odor was increased about 15-fold, as well as the roasted smelling trimethyl pyrazine.

### Example 2: Flavor composition based on apricot kernels, oats, grape seeds, and barley

20 g hulless oats (*Avena nuda*) and 40 g apricot kernels were placed in a beaker, and 100 mL water, 5 g glucose, 1.5 g leucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. The treated apricot kernels and oats were roasted in a drum roaster for 6.5 min at 170°C. 40 g of roasted apricot kernels, 20 g of roasted hulless oats as well as 20 g of untreated, dried grape seeds were mixed. Additionally, 20 g of sprouted and dried barley grains were roasted in a drum roaster for 6.5 min at 170°C and added to the mixture. The resulting mixture was ground using a ball mill to a particle size D50 of about 600 µm to obtain the flavor composition which can be applied as a cocoa powder substitute. The flavor was distinct cocoa and chocolate-like, with roasty and fruity notes and a resemblance to dark chocolate.

### Example 3: Flavor composition based on buckwheat

100 g buckwheat was placed in a beaker, and 100 mL water, 5 g glucose, 1 g glycine, 1.5 g leucine, and 0.5 g phenylalanine were added. The mixture was heated to 90°C on a hot plate while stirring and kept at that temperature for 15 min. The mixture was placed in an electric oven at 90°C for 12 hours. After the water had evaporated, the treated buckwheat was roasted in a drum roaster for 6.5 min at 170°C. The roasted buckwheat grains were ground using a ball mill to a particle size D50 of about 600 µm to obtain the flavor composition which can be applied as a cocoa powder substitute. The flavor was distinct cocoa and chocolate-like, with a resemblance to dairy chocolate.

### Example 4: Flavor composition based on fava bean

100 g fava bean (*Vicia faba*) were placed in a beaker, and 100 mL water, 5 g glucose, 1 g glycine, 0.5 g leucine, 0.5 g isoleucine, and 0.5 g phenylalanine were added. The mixture was heated to 90°C on a hot plate while stirring and kept at that temperature for 15 min. The mixture was placed in an electric oven at 90°C for 12 hours. After the water was evaporated, the treated fava beans were roasted in a drum roaster for 6.5 min at 170°C. The roasted fava beans were ground using a ball mill to a particle size D50 of about 600 µm to obtain the flavor composition which can be applied as a cocoa powder substitute. The flavor was distinct cocoa and chocolate-like, with a resemblance to dairy chocolate.

### Example 5: Flavor composition based on acidified apricot kernels, barley, grape seeds, and oats

55 g apricot kernels, 40 g oats, and 2.5 g sprouted and roasted (drum roaster for 6.5 min at 170°C) barley as well as 2.5 g grape seeds were placed in a beaker, and 200 mL water, 5 g glucose, 1 g glycine, 0.75 g leucine, 0.75 g isoleucine and 1.0 g phenylalanine were added. The mixture was then heated to 90°C on a hot plate while stirring and kept at that temperature for 15 min before removing the heat source. Following that, the mixture was placed in an electric oven at 90°C for 16 hours. After the water was evaporated, the dried mixture was roasted in a drum roaster for 12 min at 145°C. The roasted mixture was then finely ground using a ball mill to a particle size D50 of about 600 µm to obtain the flavor composition which can be applied as a cocoa powder substitute. The flavor was distinctly chocolate-like, with fruity and earthy notes, with a dark brown color, resembling dutched cocoa.

### Example 6: Flavor composition based on carob, sprouted barley, and oats

55 g carob seeds, 40 g oats, and 5g sprouted barley were placed in a beaker, and 200 mL water, 5.0 g glucose, 1.0g glycine, 0.75 g leucine, 0.75 g isoleucine, 1.0g lysine, and 1.0 g phenylalanine were added. The mixture was heated to 90°C on a hot plate while stirring and kept at that temperature for 15 min before removing the heat source. The mixture then was placed in an electric oven at 90°C for 16 hours. After the water was evaporated, the dried mixture was roasted in a drum roaster for 7 min at 150°C. The roasted mixture was then finely ground using a ball mill to a particle size D50 of about 600 µm to obtain the flavor composition which can be applied as a cocoa powder substitute. The flavor was distinctly chocolate-like, with a slightly sweet and bitter taste, fruity and earthy notes, with a dark brown color, resembling dutched cocoa.

### Example 7: Flavor composition based on apricot kernels, grape seeds, and oats

100 g apricot kernels, 42 g oats, and 3 g grape seeds were placed in a beaker, and 200 mL water, 5 g glucose, 1 g glycine, 0.75 g leucine, 0.75 g isoleucine, 1.05 g phenylalanine, and 0.5 g proline were added. The mixture was heated to 90°C on a hot plate while stirring and kept at that temperature for 15 min before removing the heat source. The mixture then was placed in an electric oven at 90°C for 16 hours. After the water was evaporated, the oat grains, grape seeds, and apricot kernels were roasted together in a drum roaster for 12 min at 145°C. The roasted grains, seeds, and kernels were then finely ground using a ball mill to a particle size D50 of about 600 µm to obtain the flavor composition which can be applied as a cocoa powder substitute. The flavor was distinctly chocolate-like, with fruity and earthy notes, resembling cocoa.

### Example 8: Preparation of milk-chocolate substitute:

Formulation: 120 g of the flavor composition of Example 1, 339 g of cocoa butter equivalent (commercially available, based on palm fat, and shea butter), 319 g of sugar, 209 g of oat flour, and 9 g of dried Aronia powder were mixed to produce 1 kg of milk-chocolate substitute mass.

Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conching device was set to 60°C and 1000 rpm for 2 hours. In the first hour, the conche was left open to remove residual light volatile acids, before the conching device was closed for the remaining 1 hour. At the end of the 2 hours, 20 minutes before stopping the conching, the lid was removed again and 4 g soy lecithin was added. The chocolate substitute was removed from the conche, tempered, and used like conventional chocolate, by molding the chocolate substitute into bars. The chocolate had a brownish color, similar to conventional dairy chocolate, and an intense chocolate-like, dairy, and creamy aroma. After cooling down and hardening, the bars had a shiny, firm surface, comparable to conventional dairy chocolate.

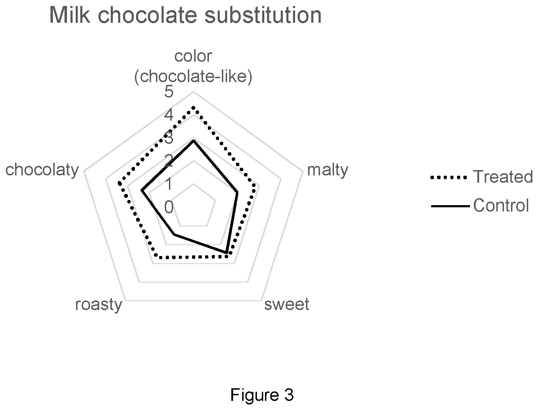

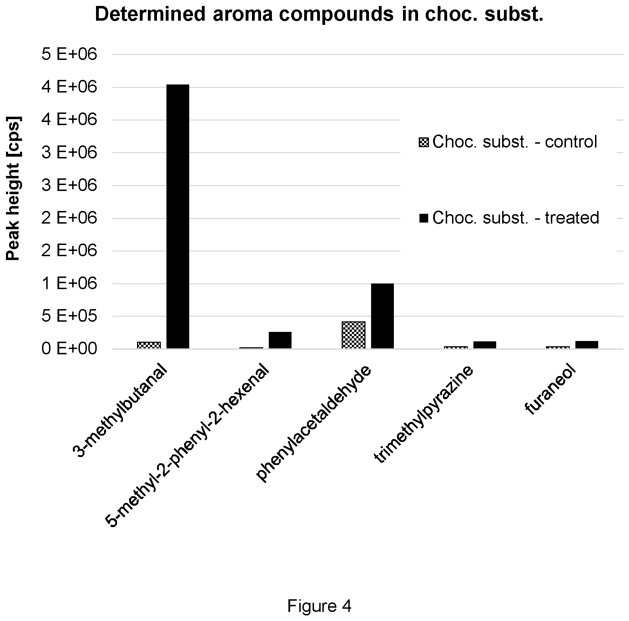

The properties of the final product were analyzed by sensory (n=8, Figure 3). The sample was compared to a control sample that was produced using a flavor composition incubated in water without glucose or amino acids but was otherwise treated equally (Example 1, control). The comparison demonstrates that by adding glucose and amino acids as precursors, the flavor properties are positively influenced. Figure 3 displays that the chocolaty, roasted, and malty flavor was increased. Also, the chocolate-like color was improved. The colors of treated and control samples were also measured by a colorimeter to give values according to CIELab. The Color measurement for the treated milk chocolate substitute gave the values L=35.86, a=9.49, b=10.23 and for the control L=45.00, a=9.6, b=7.16. The lower L and higher b values signal a darker and browner color for the treated sample. Also, the determination of aroma compounds by GC-MS (Figure 4) proved an increase in important volatiles in the treated samples. The cocoa-like smelling 5-methyl-2-phenyl-2-hexenal (10-fold increase), the malty-smelling 3-methylbutanal (40-fold), the sweet-smelling Phenylacetaldehyde (two-fold), and the two roasted smelling compounds trimethyl pyrazine (three-fold) and furaneol (three-fold) were increased in the treated sample.

### Example 9: Dark chocolate substitute:

Formulation: For 1 kg of dark-chocolate substitute, 160 g of the flavor composition (example 2), 340 g of cocoa butter equivalent (commercially available, derived from AAK based on palm fat, and shea butter), 256 g of sugar, 10 g of malt extract as a colorant and 200 g of oat drink powder were mixed. Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conche was set to 60°C and 1000 rpm for 2 hours. In the first hour, the conche was left open to remove residual light volatile acids, before the conche was closed for the remaining 1 hour. At the end of the 2 hours, 20 minutes before stopping the conching, the lid was removed again and 4 g soy lecithin was added. The chocolate substitute was removed from the conche, tempered, and used like conventional chocolate, by molding the chocolate substitute into bars. The color and flavor of the bars were similar to dark chocolate.

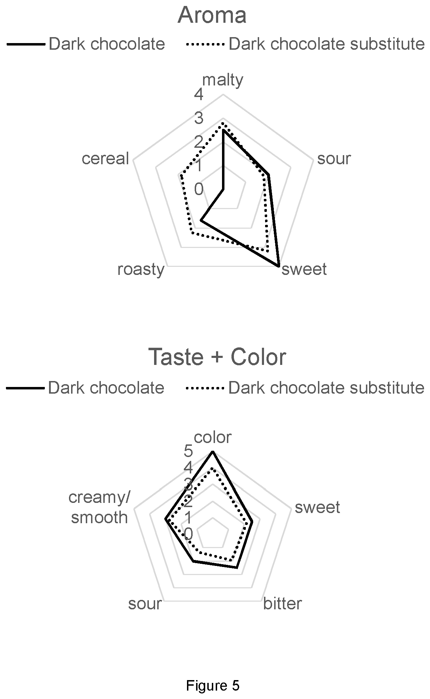

The obtained dark chocolate substitute and genuine dark chocolate with 60% cocoa content were presented to a panel (n=8) for sensory profile analysis of aroma, color, and taste (Figure 5). The malty and sour aroma had no significant difference, while the sweet aroma was tolerably lower and the roasty aroma higher in the dark chocolate substitute. Also, there was a slight cereal aroma noticeable in the chocolate substitute. The bitter, sour and sweet taste, as well as color and creaminess, were just slightly lower in the chocolate substitute compared to the 60% cocoa chocolate.

### Example 10: Preparation of chocolate substitute

Formulation: 500 g flavoring agent obtained Example 3, 2300 g sugar (sucrose), 1400 g cocoa butter equivalent (commercially available, based on shea butter), 800 g skimmed milk powder, and 160 g butter fat Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conche was set to 60°C for 5 hours. In the first hour, the conche was left open to remove residual light volatile acids, before the conche was closed for the remaining 4 hours. At the end of the 5 hours, 10 minutes before stopping the conching, the lid was removed again and 1.5g vanillin and 5g soy lecithin were added. The chocolate substitute was removed from the conche, tempered, and used like conventional chocolate, by molding the chocolate substitute into bars. The chocolate had a brownish color, similar to conventional dairy chocolate, and an intense chocolate-like, dairy, and creamy aroma. After cooling down and hardening, the bars had a shiny, firm surface, comparable to conventional dairy chocolate.

### Example 11: Preparation of chocolate substitute

Formulation: 500 g roasted oats 2300 g sugar (sucrose), 1400 g cocoa butter equivalent (commercially available, derived from AAK based on palm fat, and shea butter), 800 g skimmed milk powder, and 160 g butter fat were mixed to produce the chocolate substitute mass.

Milling: The mass was milled (3-roll roller grinder) to produce fine particles (D90, laser diffraction) of <30 µm.

Conching: The finely milled mass was then transferred into a conching device (Elkolino Conche, Buhler, Switzerland). 25 mL of an aqueous solution (pH = 9.0) containing 5 g glucose, 1 g leucine, 0.6 g phenylalanine, 0.5 g glycine, and 0.3 g proline was added to the conching device. The conche was set to 70°C for 5 hours. In the first 3 hours, the conche was left open to remove residual light volatile acids, before the conche was closed for the remaining 2 hours. At the end of the 5 hours, 10 minutes before stopping the conching, the lid was removed and 1 g vanillin and 1 g soy lecithin were added. The chocolate substitute was removed from the conche, tempered, and used like conventional chocolate, by molding the chocolate substitute into bars. The chocolate had a brownish color, similar to conventional dairy chocolate, and an intense chocolate-like, slightly popcorn-like, malty, and dairy aroma. After cooling down and hardening, the bars had a shiny, firm surface, comparable to conventional dairy chocolate.

### Example 12: Preparation of chocolate substitute

Formulation: 300 g flavor composition obtained in Example 3 and 300 g of flavor composition obtained in Example 4, 2100 g lactose, 1700 g cocoa butter equivalent (commercially available, derived from AAK based on palm fat, and shea butter), 800 g skimmed milk powder, and 160 g butter fat were mixed to produce the chocolate substitute mass.

Milling: The mass was milled using a melangeur (stone grinder) for 48 hours and a particle size distribution (D90) of <20 µm, as determined by light scattering analysis, was obtained.

Milling and conching: The milled mass was then transferred into a melangeur (a melangeur is a rotating stone grinder, heat is produced by the friction of the stone grinders with the material and the bottom stone plate). The mass was conched using this melangeur. Due to the friction of the stones, the temperature in the mass was increased to 55°C and kept at that temperature for 40 hours. After a total of 48 hours, 5 g vanillin and 5 g soy lecithin were added and after an additional 10 minutes of mixing, the melangeur was stopped. The finalized chocolate substitute mass was analyzed by means of the particle size distribution (D90, laser diffraction), and a particle size of <20 µm, was determined. The chocolate substitute mass was molded into confectionery products (e.g., by using praline and chocolate bar molds and filled with different fillings, such as marzipan, caramel, and nuts (e.g., peanuts)). The flavor of these chocolate substitute bars was mildly bitter, with a tart, mild acidity, and showed a strong chocolate-like, nutty and creamy aroma. The overall flavor was comparable to commercially available confectionery bars.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

The invention is further characterized by the following items:
Item 1. A flavor composition comprising
   at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof,
   wherein the at least one plant material has been heat-treated in the presence of at least one amino acid and/or amino acid derivative, at least one saccharide, or a combination thereof.
Item 2. The flavor composition according to item 1, wherein at least one plant material is selected from the group consisting of apricot kernels, plum kernels, peach kernels, cherry kernels, jackfruit seeds, grape seeds, carob, barley malt, oats, beans, and combinations thereof.
Item 3. The flavor composition according to item 1 or 2, wherein the at least one amino acid is selected from the group consisting of alanine, phenylalanine, glycine, isoleucine, lysine, leucine, proline, serine, threonine, valine, tyrosine, ornithine, and combinations thereof.
Item 4. The flavor composition according to any one of items 1 to 3, wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.
Item 5. The flavor composition according to any one of items 1 to 4, wherein the amino acid is selected from the group consisting of phenylalanine, glycine, isoleucine, lysine, leucine, proline, serine, threonine, valine, tyrosine, ornithine, and combinations thereof; and/or wherein the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.
Item 6. The flavor composition according to any one of items 1 to 5, wherein the at least one saccharide is selected from monosaccharides, disaccharides, and combinations thereof.
Item 7. The flavor composition according to item 6, wherein the monosaccharide is selected from the group consisting of glucose, fructose, xylose, rhamnose, and combinations thereof.
Item 8. The flavor composition according to item 6 or 7, wherein the disaccharide is selected from the group consisting of sucrose, maltose, lactose, isomaltulose, isomalt, and combinations thereof, preferably selected from the group consisting of sucrose, maltose, lactose, and combinations thereof.
Item 9. The flavor composition according to any one of items 1 to 8, wherein the flavor composition is a cocoa or chocolate flavor composition.
Item 10. The flavor composition according to any one of items 1 to 9, wherein the flavor composition is substantially free of cocoa or cocoa-derived solids.
Item 11. The flavor composition according to any one of items 1 to 10, wherein the flavor composition comprises
   (i) heat-treated apricot kernels and heat-treated oats, wherein the apricot kernels and oats have been heat-treated in the presence of glucose, glycine, isoleucine, leucine, and phenylalanine;
   (ii) grape seeds, heat-treated apricot kernels, heat-treated barley malt, and heat-treated oats, wherein the apricot kernels and oats have been heat-treated in the presence of glucose, glycine, leucine, and phenylalanine;
   (iii) heat-treated buckwheat, wherein the buckwheat has been heat-treated in the presence of glucose, glycine, leucine, and phenylalanine;
   (iv) heat-treated fava beans, wherein the fava beans have been heat-treated in the presence of glucose, glycine, leucine, isoleucine, and phenylalanine ;
   (v) heat-treated grape seeds, heat-treated apricot kernels, heat-treated barley malt, and heat-treated oats, wherein the grape seeds, apricot kernels, barley malt and oats have been heat-treated in the presence of glucose, glycine, leucine, isoleucine and phenylalanine;
   (vi) heat-treated carob, heat-treated barley malt, and heat-treated oats, wherein carob, barley malt, and oats have been heat-treated in the presence of glucose, glycine, leucine, isoleucine, lysine, and phenylalanine; or
   (vii) heat-treated oats, heat-treated grape seeds, and heat-treated apricot kernels, wherein the oats, grape seeds, and apricot kernels have been heat-treated in the presence of glucose, glycine, leucine, isoleucine, proline, and phenylalanine.
Item 12. A method for preparing a flavor composition, the method comprising
   (a) providing a mixture of
      (i) at least one plant material, and
      (ii) at least one amino acid and/or amino acid derivative, at least one saccharide, or a combination thereof,

      in an aqueous medium,
      wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
   (b) heating the aqueous mixture of step (a);
   (c) drying the heated mixture of step (b);
   (d) optionally rinsing the dried mixture obtained in step (c);
   (e) subjecting the dried mixture to a heat treatment;
   (f) optionally grinding and/or defatting the heat-treated dried mixture of step (e); and
   (g) obtaining the flavor composition.
Item 13. The method according to item 12, wherein the at least one plant material is selected from the group consisting of apricot kernels, plum kernels, peach kernels, cherry kernels, jackfruit seeds, grape seeds, carob, barley malt, beans, oats, beans, and combinations thereof.
Item 14. The method according to item 12 or 13, wherein the at least one amino acid is selected from the group consisting of alanine, phenylalanine, glycine, isoleucine, lysine, leucine, proline, serine, threonine, valine, tyrosine, ornithine, and combinations thereof.
Item 15. The method according to any one of items 12 to 14, wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.
Item 16. The method according to any one of items 12 to 15, wherein the at least one saccharide is selected from monosaccharides, disaccharides, and combinations thereof.
Item 17. The method according to item 16, wherein the monosaccharide is selected from the group consisting of glucose, fructose, xylose, rhamnose, and combinations thereof.
Item 18. The method according to item 16 or 17, wherein the disaccharide is selected from the group consisting of sucrose, maltose, lactose, isomaltulose, isomalt, and combinations thereof, preferably selected from the group consisting sucrose, maltose, lactose, and combinations thereof.
Item 19. The method according to any one of items 12 to 18, wherein the flavor composition is a cocoa or chocolate flavor composition.
Item 20. The method according to any one of items 12 to 19, wherein the flavor composition is substantially free of cocoa or cocoa-derived solids.
Item 21. The method according to any one of items 12 to 20, wherein
   (i) heating in step (b) comprising heating the aqueous mixture to a temperature of from 60°C to 100°C, preferably a temperature of from 80°C to 95°C, for at least 5 min, preferably for at least 10 min such as from 10 min to 180 min; and/or
   (ii) wherein the heat treatment in step (e) comprises roasting the dried mixture at a temperature of from 120°C to 220°C, preferably at a temperature of from 130°C to 210°C, for at least 2 min, preferably for at least 4 min such as from 4 min to 60 min.
Item 22. The method according to any one of items 12 to 21, wherein
   (i) the at least one plant material is apricot kernels and oats, the at least one amino acid is, glycine, isoleucine, leucine, and phenylalanine, and the at least one saccharide is glucose;
   (ii) the at least one plant material is grape seeds, apricot kernels, barley malt, and oats, the at least one amino acid is glycine, leucine, and phenylalanine, and the at least one saccharide is glucose;
   (iii) the at least one plant material is oats, grape seeds, and barley malt, the at least one amino acid is glycine, leucine, and phenylalanine, and the at least one saccharide is glucose;
   (iv) the at least one plant material is oats, grape seeds, and barley malt, the at least one amino acid is glycine, leucine, isoleucine, and phenylalanine, and the at least one saccharide is glucose;
   (v) the at least one plant material is grape seeds, apricot kernels, barley malt, and oats, the at least one amino acid is glycine, leucine, isoleucine, and phenylalanine, and the at least one saccharide is glucose;
   (vi) the at least one plant material is carob, apricot kernels, grape seeds, barley malt, and oats, the at least one amino acid is glycine, leucine, isoleucine, lysine and phenylalanine, and the at least one saccharide is glucose; or
   (vii) the at least one plant material is oats, grape seeds, and barley malt, the at least one amino acid is glycine, leucine, isoleucine, proline and phenylalanine, and the at least one saccharide is glucose.
Item 23. A flavor composition obtained by the method according to any one of items 12 to 22.
Item 24. A food product containing the flavor composition according to any one of items 1 to 11 and 23, preferably wherein the food product is selected from the group consisting of confectionery products, sweet baked products, ice creams, dairy- and non-dairy products, beverages, and snack products.
Item 25. The use of the flavor composition according to any one of items 1 to 11 and 23 as a cocoa substitute.
Item 26. A conched confectionery product comprising
   an emulsion of a flavor composition according to any one of items 1 to 11 and 23 and an edible fat,
   wherein the conched confectionery product is substantially free of cocoa or cocoa-derived solids.
Item 27. The conched confectionery product according to item 26, wherein the conched confectionery product comprises of from 0.5 wt.-% to 20 wt.-% flavor composition based on the total weight of the conched confectionery product, preferably of from 2 wt.-% to 20 wt.-% flavor composition based on the total weight of the conched confectionery product.
Item 28. The conched confectionery product according to item 26 or 27, wherein the conched confectionery product is substantially free of cocoa or cocoa-derived solids.
Item 29. A method for preparing a conched confectionery product, the method comprising:
   (a) providing at least one substrate carrier, wherein the substrate carrier material comprises at least one natural and/or a processed or restructured plant material, wherein the at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof;
   (b) providing at least one amino acid and/or amino acid derivative, at least one saccharide, or a combination thereof;
   (c) contacting the at least one substrate carrier material and the at least one amino acid and/or amino acid derivative, at least one saccharide, or a combination thereof, wherein contacting is carried out prior to or in a conching step;
   (d) reacting the at least one substrate carrier material with the at least one amino acid and/or amino acid derivative, at least one saccharide, or a combination thereof in a conching step to provide the conched confectionery product.
Item 30. The method according to item 29, wherein the conching step is carried out at a temperature of from 40°C to 90°C, preferably of from 50°C to 70°C, and a time of at least 8 minutes, preferably a time of from 10 minutes to 96 hours, more preferably a time of from 30 minutes to 48 hours, and even more preferably a time of from 2 hours to 24 hours.
Item 31. The method according to item 29 or 30, wherein the at least one amino acid and/or amino acid derivative, at least one saccharide, or a combination thereof is added to a lipid matrix prior to the contacting with the at least one substrate carrier material, and reacted in a conching step, and the at least one substrate carrier material is added subsequently to the lipid matrix.
Item 32. The method according to any one of items 29 to 31, wherein at least one plant material is selected from the group consisting of apricot kernels, plum kernels, peach kernels, cherry kernels, jackfruit seeds, grape seeds, carob, barley malt, oats, beans, and combinations thereof.
Item 33. The method according to any one of items 29 to 32, wherein the at least one amino acid is selected from the group consisting of alanine, phenylalanine, glycine, isoleucine, lysine, leucine, proline, serine, threonine, valine, tyrosine, ornithine, and combinations thereof.
Item 34. The method according to any one of items 29 to 33, wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.
Item 35. The method according to any one of items 29 to 34, wherein the amino acid is selected from the group consisting of phenylalanine, glycine, isoleucine, lysine, leucine, proline, serine, threonine, valine, tyrosine, ornithine, and combinations thereof; and/or wherein the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.
Item 36. The method according to any one of items 29 to 35, wherein the at least one saccharide is selected from monosaccharides, disaccharides and combinations thereof.
Item 37. The method according to item 36, wherein the monosaccharide is selected from the group consisting of glucose, fructose, xylose, rhamnose, and combinations thereof.
Item 38. The method according to item 36 or 37, wherein the disaccharide is selected from the group consisting of sucrose, maltose, lactose, isomaltulose, isomalt, and combinations thereof, preferably selected from the group consisting sucrose, maltose, lactose, and combinations thereof.
Item 39. The method according to any one of items 29 to 38, wherein
   (i) the at least one plant material is apricot kernels and oats, the at least one amino acid is, glycine, isoleucine, leucine, and phenylalanine, and the at least one saccharide is glucose;
   (ii) the at least one plant material is grape seeds, apricot kernels, barley malt and oats, the at least one amino acid is glycine, leucine, and phenylalanine, and the at least one saccharide is glucose;
   (iii) the at least one plant material is oats, grape seeds, and barley malt, the at least one amino acid is glycine, leucine, and phenylalanine, and the at least one saccharide is glucose;
   (iv) the at least one plant material is oats, grape seeds, and barley malt, the at least one amino acid is glycine, leucine, isoleucine, and phenylalanine, and the at least one saccharide is glucose;
   (v) the at least one plant material is grape seeds, apricot kernels, barley malt, and oats, the at least one amino acid is glycine, leucine, isoleucine and phenylalanine, and the at least one saccharide is glucose;
   (vi) the at least one plant material is carob, apricot kernels, grape seeds, barley malt, and oats, the at least one amino acid is glycine, leucine, isoleucine, lysine and phenylalanine, and the at least one saccharide is glucose; or
   (vii) the at least one plant material is oats, grape seeds, and barley malt, the at least one amino acid is glycine, leucine, isoleucine, proline and phenylalanine, and the at least one saccharide is glucose.
Item 40. The method according to any one of items 29 to 39, wherein
   contacting the substrate carrier material with the at least one amino acid and/or amino acid derivative, at least one saccharide, or a combination thereof comprises contacting with the at least one amino acid and/or amino acid derivative, at least one saccharide, or a combination thereof emulsified in a lipid matrix;
   the reaction is carried out in a conching step in an emulsion and/or lipid matrix; and/or
   the conching step comprises water removal of the reaction mixture comprising the substrate carrier material and the at least one amino acid and/or amino acid derivative, at least one saccharide, or a combination thereof at a temperature of from 20°C to 140°C, preferably of from 30°C to 120°C, more preferably of from 40°C to 90°C, and even more preferably of from 50°C to 80°C.
Item 41. The method according to any one of items 29 to 40, wherein
   the conched confectionery product is a chocolate confectionery product; and/or
   wherein the conched confectionery product is substantially free of cocoa or cocoa-derived solids.
Item 42. A conched confectionery product prepared by the method according to any one of items 29 to 41.
Item 43. The conched confectionery product according to item 42, wherein the conched confectionery product is a chocolate confectionery product.
Item 44. The conched confectionery product according to item 42 or 43, wherein the conched confectionery product is substantially free of cocoa or cocoa-derived solids.

## Claims

1. A cocoa or chocolate flavor composition comprising
at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, press cake, and combinations thereof,
wherein the at least one plant material has been heat-treated in the presence of at least one amino acid and/or amino acid derivative, at least one saccharide, or a combination thereof.

2. The flavor composition of claim 1, wherein the at least one plant material comprises grape seeds and/or pomace.

3. The flavor composition of claim 1 or 2, wherein the at least one plant material comprises press cake, preferably sunflower press cake.

4. The flavor composition of any one of claims 1 to 3, wherein the at least one amino acid is selected from the group consisting of alanine, phenylalanine, glycine, isoleucine, lysine, leucine, proline, serine, threonine, valine, tyrosine, ornithine, and combinations thereof, and/or wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.

5. The flavor composition according to any one of claims 1 to 4, wherein the at least one saccharide is selected from monosaccharides, disaccharides, and combinations thereof, wherein the monosaccharide is preferably selected from the group consisting of glucose, fructose, xylose, rhamnose, and combinations thereof; and/or wherein the disaccharide is preferably selected from the group consisting of sucrose, maltose, lactose, isomaltulose, isomalt, and combinations thereof.

6. The flavor composition according to any one of claims 1 to 5, wherein the flavor composition is substantially free of cocoa or cocoa-derived solids.

7. A method of preparing a cocoa or chocolate flavor composition, the method comprising
(a) providing a mixture of
(i) at least one plant material, and
(ii) at least one amino acid and/or amino acid derivative, at least one saccharide, or a combination thereof,
in an aqueous medium,
wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, press cake, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition.

8. The method of claim 7, wherein the at least one plant material is selected from the group consisting of grape seeds and/or pomace.

9. The method of claim 7 or 8, wherein the at least one plant material comprises press cake, preferably sunflower press cake.

10. The method of any one of claims 7 to 9, wherein
(i) the at least one amino acid is selected from the group consisting of alanine, phenylalanine, glycine, isoleucine, lysine, leucine, proline, serine, threonine, valine, tyrosine, ornithine, and combinations thereof, and/or wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof; and/or
(ii) the at least one saccharide is selected from monosaccharides, disaccharides, and combinations thereof, preferably wherein the monosaccharide is selected from the group consisting of glucose, fructose, xylose, rhamnose, and combinations thereof, and or preferably wherein the disaccharide is selected from the group consisting of sucrose, maltose, lactose, isomaltulose, isomalt, and combinations thereof, preferably selected from the group consisting sucrose, maltose, lactose, and combinations thereof.

11. The method of any one of claims 7 to 10, wherein
(i) heating in step (b) comprising heating the aqueous mixture to a temperature of from 60°C to 100°C, preferably a temperature of from 80°C to 95°C, for at least 5 min, preferably for at least 10 min such as from 10 min to 180 min;
(ii) the heat treatment in step (e) comprises roasting the dried mixture at a temperature of from 120°C to 220°C, preferably at a temperature of from 130°C to 210°C, for at least 2 min, preferably for at least 4 min such as from 4 min to 60 min; and/or
(iii) the method further comprises adjusting the pH of the mixture of step (a) to a range of from 6.5 to 9.5. Preferably, the pH is adjusted to a range of from 8.0 to 9.0.

12. A flavor composition obtained by the method of any one of claims 7 to 11.

13. A food product containing the flavor composition of any one of claims 1 to 6 and 11, preferably wherein the food product is selected from the group consisting of confectionery products, sweet baked products, ice creams, dairy- and non-dairy products, beverages, and snack products.

14. Use of the flavor composition of any one of claims 1 to 6 and 11 in a food product, preferably as a cocoa substitute.

15. A conched confectionery product comprising
an emulsion of a flavor composition of any one of claims 1 to 6 and 11 and an edible fat, wherein the conched confectionery product is substantially free of cocoa or cocoa-derived solids.
